# EUROPÄISCHE PATENTANMELDUNG

(11) **EP 2 460 620 A1**
(43) Veröffentlichungstag der Anmeldung: **06.06.2012**
(21) Anmeldenummer: 11009083.4
(22) Anmeldetag: 16.11.2011
(51) Int. Cl.: B23P 21/00, B62D 65/00

(54) **Transportsystem**

(30) Priorität: 03.12.2010 DE 102010053329
(71) Anmelder: ThyssenKrupp System Engineering GmbH, 74076 Heilbronn (DE)
(72) Erfinder: Thierfelder, Thomas, 09127 Chemnitz (DE); Müller, Albrecht, 09249 Taura (DE); Stein, Hans, 09337 Hohenstein-Ernsttahl (DE)
(74) Vertreter: Kirchner, Sven

(57) **Zusammenfassung**

Die Erfindung betrifft ein Transportsystem für den Transport von Bauteilen innerhalb eines Fertigungsprozesses, wobei die Bauteile zum Zwecke des Zusammenbaus an verschiedene Fertigungsstationen (S1-S14) transportiert werden. Das erfindungsgemäße Transportsystem umfasst eine entlang einer vorbestimmten Transportstrecke verfahrbare Einrichtung zur Aufnahme eines durch den Anbau von Anbauteilen fertigzustellenden Grundbauteils, insbesondere eines verfahrbaren Spannrahmens zur Aufnahme eines fertigzustellenden Karosseriebauteils, sowie eine Bevorratungseinrichtung zur Bevorratung der Anbauteile, die gemeinsam mit der verfahrbaren Einrichtung entlang der Transportstrecke bewegbar ist.

## Beschreibung

Die vorliegende Erfindung betrifft ein Transportsystem für den Transport von Bauteilen innerhalb eines Fertigungsprozesses, insbesondere innerhalb eines Fertigungsprozesses für die Fertigung von Kraftfahrzeugen. Aus dem Stand der Technik ist es im Wesentlichen bekannt, über ein zentrales Förderband eine zentrale Einheit in Form eines Grundbauteils zu transportieren und an unterschiedlichen Fertigungsstationen bzw. Bearbeitungsstationen seitlich entsprechende Anbauteile über sog. Spannrahmen bereit zu stellen. Dabei können die Spannrahmen über sog. Transport- bzw. Handlingroboter oder aber über schienengeführte Transportsysteme oder dergleichen an die zentrale Förderstrecke herangefahren und dort bereitgestellt werden.

Bearbeitungsstationen für Fahrzeugkarosserien in entsprechenden Transfer- bzw. Förderlinien sind beispielsweise bekannt aus der EP 0 579 160 A1, DE 199 17 908 A1, DE 36 06 058 C2 sowie der DE 693 06 480 T2.

Der vorliegenden Erfindung liegt die Aufgabe zugrunde ein Transportsystem für den Transport von Bauteilen innerhalb eines Fertigungsprozesses bereit zu stellen, durch dass die Fertigung im Hinblick auf unterschiedliche zu fertigende Typen flexibler handhabbar ist. Insbesondere soll ein Transportsystem für die Verwendung innerhalb der Kraftfahrzeugfertigung bereit gestellt werden, wobei unterschiedliche Fahrzeugtypen bzw. unterschiedliche zu fertigende Kraftfahrzeugkomponenten auf ein und dergleichen Fertigungseinrichtung gefertigt werden können, wobei diese innerhalb kürzester Zeit an die neuen Anforderungen anpassbar bzw. umrüstbar ist.

Gemäß der Erfindung wird diese Aufgabe durch die Gesamtheit der Merkmale des Patentanspruches 1 gelöst. Bevorzugte Ausführungen der Erfindung sind in den entsprechenden Unteransprüchen 2-6 angegeben. Gemäß Patentanspruch 7 wird eine Fertigungseinrichtung umfassend ein Transportsystem gemäß einem der Patentansprüche 1-6 vorgestellt. Die dem Patentanspruch 7 nachgeordneten Patentansprüche beschreiben bevorzugte Weiterbildungen der Fertigungseinrichtung.

Durch das erfindungsgemäße Transportsystem werden Bauteile zum Zwecke des Zusammenbaus an verschiedene Fertigungsstationen innerhalb des Fertigungsprozesses transportiert. Hierfür umfasst das Transportsystem zumindest eine verfahrbare Einrichtung zur Aufnahme eines durch den (mit Vorteil gefügten) Anbau von Anbauteilen fertigzustellenden Grundbauteils, welche entlang einer vorbestimmten Transportstrecke verfahrbar ist. Mit Vorteil ist diese verfahrbare Einrichtung zur Aufnahme des Grundbauteils als verfahrbarer Spannrahmen bzw. als verfahrbarer Spannrahmentransportwagen zur Aufnahme eines Spannrahmens für die Aufnahme eines fertigzustellenden Grundbauteils/Karosseriebauteils ausgeführt. Darüber hinaus umfasst das erfindungsgemäße Transportsystem eine Bevorratungseinrichtung zum Transport und zur Bevorratung der Anbauteile die gemeinsam mit der verfahrbaren Einrichtung entlang der Transportstrecke bewegbar ist. Diese Bevorratungseinrichtung kann in einer möglichen Ausführungsform als koppelbare Anhängereinrichtung oder dergleichen zur An- bzw. Abkopplung an die verfahrbare Einrichtung ausgebildet sein. In einer anderen Ausführungsform kann die Bevorratungseinrichtung auch Bestandteil der verfahrbaren Einrichtung selbst sein.

In einer besonders bevorzugten Ausführungsform der Erfindung ist die bzw. jede verfahrbare Einrichtung zur Aufnahme eines Grundbauteils in Form eines Kraftfahrzeugbauteils oder eines Flugzeugbauteils ausgebildet. Insbesondere ist die Einrichtung zur Aufnahme eines Fahrzeugkarosseriebauteils, eines Motor- oder Getriebebauteils oder dergleichen ausgebildet. In einer möglichen Weiterbildung der Bevorratungseinrichtung ist diese zusätzlich für den Transport und die Bevorratung von einem oder mehreren Bearbeitungswerkzeug(en) wie einem Bauteilgreifer und/oder einer Schweißzange oder dergleichen ausgebildet. Das Transportsystem umfasst ferner Führungsmittel, welche mit der verfahrbaren Einrichtung zur Aufnahme des Grundbauteils und gegebenenfalls zusätzlich zur Führung der koppelbaren Bevorratungseinrichtung zum Zwecke der Führung entlang einer vorbestimmten Transportstrecke zusammenwirken. Diese Führungsmittel können beispielsweise durch boden- und/oder deckenseitige Führungsschienen oder aber durch berührungslos arbeitende elektronische oder elektromagnetische Einrichtungen oder dergleichen ausgebildet sein.

Die vorliegende Erfindung umfasst ferner eine Fertigungseinrichtung zur Fertigung einer aus einer Mehrzahl von Einzelbauteilen (Grundbauteil und Anbauteile) bestehenden Kraftfahrzeugkomponente/Kraftfahrzeugbaugruppe. Diese Fertigungseinrichtung umfasst ein erfindungsgemäßes Transportsystem, wie vorstehend beschrieben, sowie eine Mehrzahl von Fertigungsstationen innerhalb derer das Grundbauteil und das bzw. die Anbauteil(e) miteinander gefügt werden können. Mit Vorteil umfasst die Fertigungseinrichtung zumindest eine oder mehrere der nachfolgend aufgeführten Fertigungsstationen, wie eine Beladestation zur Beladung der Bevorratungseinrichtung, eine Umbaustation zum Umbau der verfahrbaren Einrichtung, eine Einrichtungswechselstation für den Austausch von einer verfahrbaren Einrichtung gegen eine andere verfahrbare Einrichtung, eine weitere Beladestation zur Beladung der verfahrbaren Einrichtung mit einem vorbestimmten Grundbauteil, sowie mit Vorteil eine Mehrzahl von Bearbeitungsstationen in der das Grundbauteil mit zumindest einem Anbauteil gefügt werden kann, sowie eine Entladestation in der die gefertigte Kraftfahrzeugkomponente zur weiteren Ver- bzw. Bearbeitung entnommen werden kann.

Die Erfindung wird nachfolgend anhand von Zeichnungsfiguren zweier beispielhaft schematisch dargestellter Fertigungseinrichtungen näher erläutert. Es zeigen:
- Fig. 1: eine Fertigungseinrichtung zur Fertigung einer aus einer Mehrzahl von Einzelbauteilen bestehenden Kraftfahrzeugkomponente, mit einem Transportsystem gemäß der Erfindung in einer möglichen ersten Ausführungsform und
- Fig. 2: eine zweite mögliche Ausführungsform einer Fertigungseinrichtung zur Fertigung einer aus einer Mehrzahl von Einzelbauteilen zusammen setzbaren Kraftfahrzeugkomponente, mit einem Transportsystem gemäß der Erfindung.

Ein gemäß den Zeichnungsfiguren 1 und 2 eingesetztes Transportsystem für den Transport von Bauteilen innerhalb einer Fertigungsstraße (bzw. innerhalb eines Fertigungsprozesses) umfasst eine verfahrbare Einrichtung 2 zur Aufnahme eines durch den Anbau von Anbauteilen fertigzustellenden Grundbauteils, sowie eine Bevorratungseinrichtung 4 zur Bevorratung der Anbauteile, welche gemeinsam mit der verfahrbaren Einrichtung 2 entlang der Transportstrecke T bewegbar ist. Dabei ist die verfahrbare Einrichtung 2 beispielsweise als verfahrbarer, insbesondere mit einem eigenen Fortbewegungsantrieb ausgestatteter Transportwagen ausgebildet, welcher unterschiedliche Spannrahmen zur Aufnahme verschiedenster Bauteile aufnehmen und befördern kann. Im dargestellten Ausführungsbeispiel ist die Bevorratungseinrichtung 4 zur Bevorratung der Anbauteile als separate koppelbare Einrichtung, beispielsweise in Form eines durch die angetriebene verfahrbare Einrichtung 2 gezogenen Anhängers ausgebildet. In einer alternativen Ausführungsform (nicht dargestellt) kann die Bevorratungseinrichtung 4 auch in die verfahrbare Einrichtung 2 integriert sein, sodass die verfahrbare Einrichtung 2 beispielsweise einen verfahrbaren Transportwagen zur Aufnahme eines Spannrahmens beinhaltet, als auch einen entsprechenden Bevorratungsteil zur Bevorratung der Anbauteile aufweist.

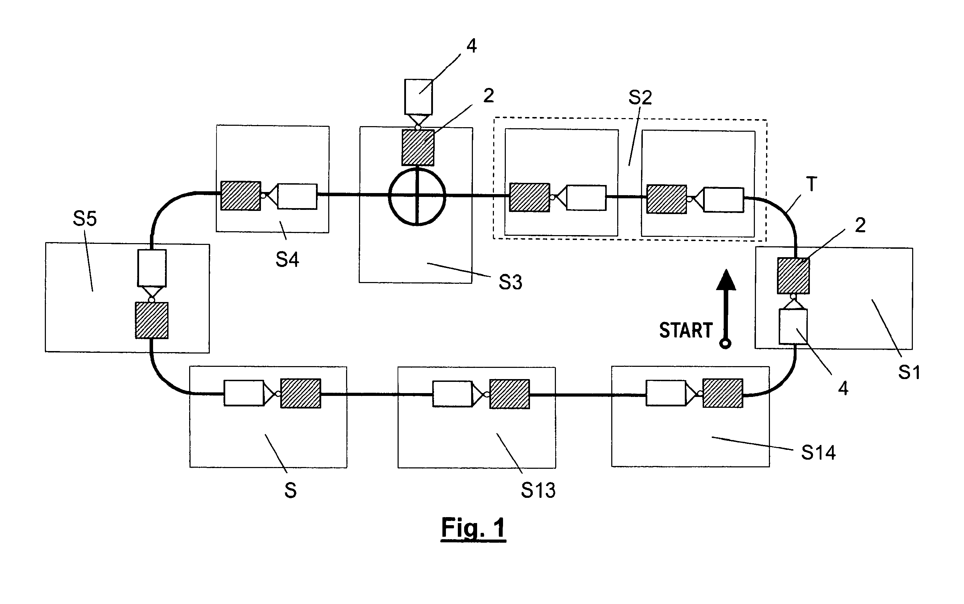

In Fig. 1 ist eine Fertigungseinrichtung zur Fertigung einer aus einer Mehrzahl von Einzelbauteilen bestehenden Fertigungskomponente/Baugruppe in stark schematisierter Darstellung gezeigt. Die Fertigungseinrichtung umfasst ein Transportsystem gemäß der Erfindung sowie eine Mehrzahl von einzelnen Fertigungsstationen, die entlang der vorbestimmten Transportstrecke T aufeinander folgen und hintereinander angeordnet sind. Die dargestellte Fertigungseinrichtung umfasst als einzelne Fertigungsstationen S1―S8: eine Umbaustation (Fertigungsstation S1) sowie eine Beladestation (Fertigungsstation S2), eine Einrichtungswechsel- bzw. Einschleussstation (Fertigungsstation S3), eine erste Bearbeitungsstation (Fertigungsstation S4), eine zweite Bearbeitungsstation (Fertigungsstation S5), eine Leerstation (Fertigungsstation S), eine Messstation (Fertigungsstation S13) sowie eine Entladestation (Fertigungsstation S14). Dabei sind die einzelnen Fertigungsstationen S1-S5 und S13, S14 über ein, beispielsweise als Schienensystem ausgeführtes Führungsmittel entlang der Transportstrecke T miteinander verbunden, sodass mit Vorteil ein geschlossener Fertigungskreis entsteht.

In der sog. Umbaustation (Fertigungsstation S1) erfolgt der Umbau der verfahrbaren Einrichtung 2 in Anpassung an die zu fertigende Fertigungskomponente, insbesondere in Anpassung an die zu fertigende Karosseriekomponente wie beispielsweise eine Fahrzeugtür, einen Fahrzeugvorderbau, eine Fahrzeugmotorhaube oder einen Fahrzeugkofferraumdeckel oder dergleichen. Hierfür wird die mit Vorteil einen entsprechenden Spannrahmen umfassende bzw. aufnehmende, fahrbare Einrichtung 2 im Hinblick auf ihre Führungs-, Spann- und Zentrierelemente entsprechend adaptiert. Die hierfür vorgesehenen austauschbaren Elemente befinden sich in entsprechenden Ablagen bzw. Speichern. Die genaue Position der verfahrbaren Einrichtung 2 innerhalb der Umbaustation wird durch sog. "Abstecken" realisiert. Hierfür wird die verfahrbare Einrichtung 2 in eine vorbestimmte und mit entsprechenden Überwachungsmitteln überwachte Umbauposition geführt und dort durch entsprechende Mittel gehalten bzw. fixiert.

Die im dargestellten Ausführungsbeispiel der Umbaustation nachfolgende Beladestation (Fertigungsstation S2) umfasst im dargestellten Ausführungsbeispiel zwei Unterstationen, wobei innerhalb einer ersten Unterstation ein manuelles Beladen und innerhalb einer zweiten Unterstation ein automatisiertes Beladen (beispielsweise durch Transportroboter) der Bevorratungseinrichtung 4 erfolgen soll. Innerhalb der Beladestation kann beispielsweise die Bevorratungseinrichtung 4 mit allen erforderlichen Anbauteilen für eine zu fertigende Fahrzeugtür oder einen zu fertigenden Fahrzeugvorbau oder dergleichen beladen werden. Ebenfalls ist denkbar innerhalb dieser Station auch bereits die verfahrbare Einrichtung 2 mit dem entsprechenden gewünschten Grundbauteil zu versehen.

In der nachfolgenden als sog. Einschleusstation oder Einrichtungswechselstation ausgebildeten Fertigungsstation S3, können die verfahrbare Einrichtung 2 und/oder die Bevorratungseinrichtung 4 entsprechend ausgeschleust und durch eine andere Einrichtung ihrer Art ersetzt werden. Hierfür kann beispielsweise eine Drehscheibe vorgesehen sein, über die die verfahrbare Einrichtung und/oder die Bevorratungseinrichtung 4 beispielsweise um 90° zur Förderrichtung verdreht werden und somit aus der vorbestimmten Transportstrecke T ausgeschleust werden können. Auf diese Weise kann beispielsweise die als Werkstückanhänger ausgebildete Bevorratungseinrichtung 4 abgehängt und durch eine andere Bevorratungseinrichtung ersetzt werden bzw. die verfahrbare Einrichtung 2 und/oder die Bevorratungseinrichtung 4 in einen Zwischenpuffer ein- bzw. ausgefahren werden und/oder fehlerhafte Baugruppen somit entsprechend ausgeschleust werden.

In den nachfolgenden als Bearbeitungsstationen ausgebildeten Fertigungsstationen S4 und S5 wird die verfahrbare Einrichtung 2 nebst Bevorratungseinrichtung 4 wiederum durch entsprechendes Abstecken genau positioniert, sodass sowohl das zu bestückende Grundbauteil als auch die bevorrateten Anbauteile in bekannten vordefinierten Positionen sich befinden und durch die entsprechenden Roboter (Schweißroboter, Greifroboter oder dergleichen) bearbeitet werden können. So kann beispielsweise in einer derartigen Schweißstation ein mit dem Grundbauteil zu verbindendes Anbauteil aus der Bevorratungseinrichtung entnommen und positionsgenau dem Grundbauteil zugeführt und über entsprechende Schweißroboter der jeweiligen Bearbeitungsstation mit dem Grundbauteil gefügt werden. Dabei kann in der ersten Bearbeitungsstation (Fertigungsstation S4) beispielsweise ein sog. Vorfügen durch Punktschweißen oder dergleichen erfolgen, während in der nachgelagerten, zweiten Bearbeitungsstation (Fertigungsstation S5) ein entsprechendes Ausschweißen der entsprechenden Verbindungsstellen erfolgt. Die der zweiten Bearbeitungsstation nachgelagerte Leerstation (Fertigungsstation S) soll veranschaulichen, dass hier weitere Bearbeitungsmöglichkeiten innerhalb der Fertigungseinrichtung bereit gestellt werden können, sodass auch unterschiedliche Fertigungskomponenten auf der gleichen Fertigungseinrichtung gefertigt werden können. So ist es beispielsweise möglich, dass in einer ersten Betriebsweise der Fertigungseinrichtung eine Motorhaube für ein Kraftfahrzeug gefertigt wird innerhalb der, die ein oder andere Leerstation nicht benötigt wird, während in einer anderen Betriebsweise der Fertigungseinrichtung beispielsweise für einen doch aufwändigeren Fahrzeugvorbau die vorhandenen Bearbeitungsstationen durch weitere zusätzliche Bearbeitungsstationen (vorher Leerstationen) ergänzt werden können.

Den Bearbeitungsstationen (Fertigungsstationen S4 und S5) nachgelagert ist noch eine Messstation (Fertigungsstation S13) vorhanden, in der über Messroboter oder dergleichen gemäß vorgegebenen Prüfprogrammen die Qualität der gefertigten Fertigungskomponente überprüft werden kann.

In einer der Messstation nachfolgenden Entladestation (Fertigungsstation S14) kann die hergestellte Fertigungskomponente aus der Fertigungseinrichtung bzw. der Transportstrecke T der Fertigungseinrichtung entnommen werden. Hierfür kann/können beispielsweise einer oder mehrere Handlingroboter vorgesehen sein, die die fertiggestellte Baugruppe aus dem Spannrahmen entnimmt und sie in einer nachgelagerte (nicht dargestellte) Fördereinrichtung ablegt. Im Anschluss an die Entladestation fährt das Transportsystem wieder zurück in die Umbaustation und der beschriebene Kreislauf beginnt von vorne.

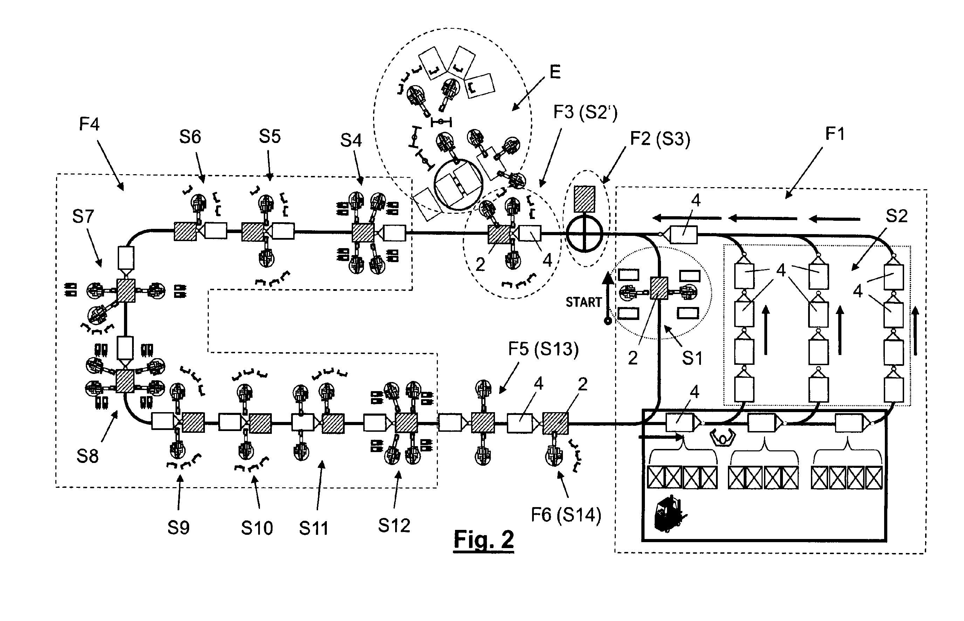

In Fig. 2 ist eine Fertigungseinrichtung zur Fertigung einer entsprechenden Baugruppe, insbesondere einer Kraftfahrzeugbaugruppe, z.B. in Form eines Kraftfahrzeugvorbaus, in schematisierter Darstellung gezeigt. Grob kann diese Fertigungseinrichtung in insgesamt fünf unterschiedliche Fertigungseinrichtungsabschnitte F1-F5 aufgeteilt werden.

In einem ersten Fertigungseinrichtungsabschnitt F1 ist die vorstehend beschriebene Umbaustation (Fertigungsstation S1) zum Umbau der verfahrbaren Einrichtung 2 nebst einem parallel geschalteten Beladebereich gemäß der Beladestation (Fertigungsstation S2) aus Fig. 1 dargestellt. Dabei wird in der Umbaustation ausschließlich die verfahrbare Einrichtung 2 auf den bevorstehenden Fertigungsprozess vorbereitet, indem beispielsweise ein verfahrbarer Transportwagen mit einem erforderlichen Spannrahmen bestückt wird. In dem parallel geschalteten Beladebereich können manuelle und/oder automatisierte Beladevorgänge zur Beladung der koppelbaren Bevorratungseinrichtung 4 vorgesehen sein. Sind sowohl die verfahrbare Einrichtung 2 als auch die koppelbare Bevorratungseinrichtung 4 für den bevorstehenden Fertigungsprozess vorbereitet, werden diese am Ende des ersten Fertigungseinrichtungsabschnittes F1 miteinander gekoppelt. Das aus verfahrbarer Einrichtung 2 und gekoppelter Bevorratungseinrichtung 4 bestehende Transportsystem fährt nunmehr entlang der vorbestimmten Transportstrecke T aus dem Fertigungseinrichtungsabschnitt F1 heraus und fährt als zweiten Fertigungseinrichtungsabschnitt F2 die in Fig. 1 bereits beschriebene Einrichtungswechsel- bzw. Einschleusstation (Fertigungsstation S3) an. In der Einschleusstation kann beispielsweise der Spannrahmentransportwagen durch einen Spannrahmentransportwagen anderer Art (z.B durch einen Spannrahmen-Transportwagen geeignet für ein anderes Grundbauteil) ausgetauscht werden, bevor er nebst der Bevorratungseinrichtung 4 in den nachfolgenden Fertigungseinrichtungsabschnitt F3 überführt wird, in welchem der Spannrahmen der verfahrbaren Einrichtung 2 mit einem entsprechendem Grundbauteil bestückt wird. Im dargestellten Ausführungsbeispiel ist dem Fertigungseinrichtungsabschnitt F3 eine Vorfertigungseinrichtung E zugeordnet, in der ein entsprechendes Grundbauteil bis zu einer gewissen vorbestimmten Fertigungstiefe vorgefertigt wird. Hierfür umfasst die Vorfertigungseinrichtung E eine Mehrzahl von Schweiß- und Handlingrobotern. Aus dem Fertigungseinrichtungsabschnitt F3 fährt das Transportsystem weiter in den nachfolgenden Fertigungseinrichtungsabschnitt F4 innerhalb welchem die vorgefertigte Baugruppe mit den in der gekoppelten Bevorratungseinrichtung 4 bevorrateten Anbauteilen nach und nach zu der gewünschten zu fertigenden Baugruppe endgefertigt wird.

In dem der eigentlichen Bearbeitung dienenden Fertigungseinrichtungsabschnitt F4 nachfolgenden, als Messstation (Fertigungsstation S3) ausgeführten Fertigungsabschnitt F5 wird die endgefertigte Baugruppe nun auf entsprechende Qualität geprüft. Hierfür sind innerhalb des Fertigungseinrichtungsabschnittes F5 entsprechende Prüfeinrichtungen vorgesehen, die die endgefertigte Baugruppe mit Vorteil teil- oder vollautomatisiert und mit Vorteil computergestützt überprüfen.

In dem der Messstation folgenden letzten und als Entladestation (Fertigungsstation S14) ausgeführten Fertigungseinrichtungsabschnitt F6 ist das Entladen des Transportsystems vorgesehen, wobei beispielsweise durch entsprechende Handlingroboter (oder ganz oder teilweise manuell) die endgefertigte Baugruppe aus der verfahrbaren Einrichtung 2 bzw. dem entsprechendem Spannrahmen entnommen und einer (nicht dargestellten) Fördereinrichtung zur weiteren Ver- bzw. Bearbeitung übergeben wird. Das nunmehr entleerte Transportsystem wird, bevor es wieder in den ersten Fertigungseinrichtungsabschnitt F1 zurück überführt wird, entsprechend getrennt, sodass die entkoppelte Bevorratungseinrichtung 4 wieder zurück in den Beladebereich überführt werden kann und die verfahrbare Einrichtung 2 wieder der Umbaustation S1 zugeführt wird. An dieser Stelle beginnt der zuvor beschriebene Zyklus von vorne. Im dargestellten Ausführungsbeispiel ist es vorgesehen, einen entsprechenden Umbau der verfahrbaren Einrichtung zur Aufnahme des Grundbauteils vorzunehmen, indem etwa ein Spannrahmenumbau von Spannrahmen geeignet für Zweitürer auf Spannrahmen geeignet für Viertürer erfolgt. Hierfür können beispielsweise entsprechende Spannelemente und Zentriervorrichtungen des Spannrahmens ausgetauscht und/oder anders positioniert werden. Eine Umstellung der Fertigung von etwa einer Fahrzeugtür auf eine Heckklappe oder Motorhaube oder dergleichen, erfolgt nicht durch einfachen Spannrahmenumbau, sondern vielmehr durch einen Tausch des kompletten Spannrahmens. Dieser Spannrahmentausch erfolgt in dem nachgelagerten Fertigungseinrichtungsabschnitt F2, indem beispielsweise die verfahrbare Einrichtung 2 aus der Transportstrecke T ausgeschleust und durch eine andere verfahrbare Einrichtung (etwa eine Einrichtung die bereits einen anderen Spannrahmen trägt) ausgetauscht wird. Dabei kann der Fertigungseinrichtungsabschnitt F2 alternativ oder zusätzlich zwischen der Entladestation und der Umbaustation am Ende des Fertigungskreislaufs angeordnet sein.

## Patentansprüche

1. Transportsystem für den Transport von Bauteilen innerhalb eines Fertigungsprozesses, wobei die Bauteile zum Zwecke des Zusammenbaus an verschiedene Fertigungsstationen (S1-S14) transportiert werden,
- mit einer entlang einer vorbestimmten Transportstrecke (T) verfahrbaren Einrichtung (2) zur Aufnahme eines durch den Anbau von Anbauteilen fertigzustellenden Grundbauteils, insbesondere eines verfahrbaren Spannrahmens zur Aufnahme eines fertigzustellenden Karosseriebauteils,
- sowie mit einer Bevorratungseinrichtung (4) zur Bevorratung der Anbauteile, die gemeinsam mit der verfahrbaren Einrichtung (2) entlang der Transportstrecke (T) bewegbar ist.

2. Transportsystem nach Anspruch 1, **dadurch gekennzeichnet, dass** die Bevorratungseinrichtung (4) als separate, koppelbare Bevorratungseinrichtung zur An- bzw. Abkopplung an die verfahrbare Einrichtung (2) ausgebildet ist.

3. Transportsystem nach Anspruch 1, **dadurch gekennzeichnet, dass** die Bevorratungseinrichtung (4) Bestandteil der Einrichtung (2) ist.

4. Transportsystem nach einem oder mehreren der vorstehenden Ansprüche, **dadurch gekennzeichnet, dass** die verfahrbare Einrichtung (2) zur Aufnahme eines Kraftfahrzeugbauteils, insbesondere zur Aufnahme eines Karosseriebauteils oder Motor-oder Getriebebauteils ausgebildet ist.

5. Transportsystem nach einem oder mehreren der vorstehenden Ansprüche, **dadurch gekennzeichnet, dass** die Bevorratungseinrichtung (4) zur Bevorratung von einem Bearbeitungswerkzeug ausgebildet ist.

6. Transportsystem nach einem oder mehreren der vorstehenden Ansprüche, **dadurch gekennzeichnet, dass** die Einrichtung (2) und die Bevorratungseinrichtung (4) über Führungsmittel entlang der vorbestimmten Transportstrecke (T) geführt sind, insbesondere bodenseitig schienengeführt sind, und die Einrichtung (2) und/oder die Bevorratungseinrichtung (4) eine Antriebseinrichtung aufweist bzw. aufweisen.

7. Fertigungseinrichtung zur Fertigung einer aus einer Mehrzahl von Einzelbauteilen bestehenden Baugruppe, umfassend
- ein Transportsystem nach einem oder mehreren der vorstehenden Ansprüche, sowie
- eine Mehrzahl von Fertigungsstationen (S1-S14),
- wobei das System innerhalb der Fertigungseinrichtung unterschiedliche Fertigungsstationen (S1-S14) durchläuft.

8. Fertigungseinrichtung nach Anspruch 7, **dadurch gekennzeichnet, dass** die Fertigungseinrichtung eine als Beladestation ausgebildete Fertigungsstation (S2) umfasst, in der die bzw. jede verfahrbare Bevorratungseinrichtung (4) mit den vorbestimmten Anbauteilen bestückt werden kann.

9. Fertigungseinrichtung nach Anspruch 7 oder 8, **dadurch gekennzeichnet, dass** die Fertigungseinrichtung eine als Umbaustation ausgebildete Fertigungsstation (S1) aufweist, in der die Einrichtung (2) im Hinblick auf das aufzunehmende Grundbauteil durch Austausch von grundbauteilspezifischen Aufnahmeeinrichtungen umgebaut werden kann.

10. Fertigungseinrichtung nach einem oder mehreren der vorstehenden Ansprüche 7-9, **dadurch gekennzeichnet, dass** die Fertigungseinrichtung eine als EinrichtungsWechselstation ausgebildete Fertigungsstation (S3) aufweist, in der die verfahrbare Einrichtung (2) gegen eine andere verfahrbare Einrichtung (2) ausgetauscht werden kann.

11. Fertigungseinrichtung nach einem oder mehreren der vorstehenden Ansprüche 7-10, **dadurch gekennzeichnet, dass** die Fertigungseinrichtung eine als weitere Beladestation ausgebildete Fertigungsstation (S2') umfasst, in der die bzw. jede verfahrbare Einrichtung (2) mit einem vorbestimmten Grundbauteil bestückt werden kann.

12. Fertigungseinrichtung nach Anspruch 11, **dadurch gekennzeichnet, dass** der weiteren Beladestation eine Vorfertigungseinrichtung (E) zur Herstellung des vorbestimmten Grundbauteils bzw. der vorbestimmten Grundbauteile zugeordnet ist.

13. Fertigungseinrichtung nach einem oder mehreren der vorstehenden Ansprüche 7-12, **dadurch gekennzeichnet, dass** die Fertigungseinrichtung zumindest eine als Bearbeitungssation ausgebildete Fertigungsstation (S4-S12) aufweist, in der das Grundbauteil und zumindest ein Anbauteil gefügt werden.

14. Fertigungseinrichtung nach einem oder mehreren der vorstehenden Ansprüche 7-13, **dadurch gekennzeichnet, dass** die Fertigungseinrichtung zumindest eine als Prüfstation ausgebildete Fertigungsstation (S13) umfasst, in der die endgefertigten Baugruppen auf Einhaltung vorbestimmter Qualitätskriterien überwacht werden.

15. Fertigungseinrichtung nach einem oder mehreren der vorstehenden Ansprüche 7-14, **dadurch gekennzeichnet, dass** die Fertigungseinrichtung zumindest eine als Entladestation ausgebildete Fertigungsstation (S14) umfasst, in der die aus dem vorbestimmten Grundbauteil und dem bzw. den vorbestimmten Anbauteil(en) gefertigte Baugruppe entnommen werden kann.
